Europäisches Patentamt

European Patent Office

Office européen des brevets

(11) Veröffentlichungsnummer: **0 326 939 B1**

(19)

## EUROPÄISCHE PATENTSCHRIFT

(12)

(45) Veröffentlichungstag der Patentschrift: **30.11.94**

(21) Anmeldenummer: **89101327.8**

(22) Anmeldetag: **26.01.89**

(51) Int. Cl.5: **C08B 11/22**, B01D 33/06, B01D 33/58

(54) Verfahren zum Abtrennen von Celluloseethern aus einer Celluloseethersuspension.

(30) Priorität: **05.02.88 DE 3803370**

(43) Veröffentlichungstag der Anmeldung:
**09.08.89 Patentblatt 89/32**

(45) Bekanntmachung des Hinweises auf die
Patenterteilung:
**30.11.94 Patentblatt 94/48**

(84) Benannte Vertragsstaaten:
**BE DE FR GB NL**

(56) Entgegenhaltungen:
BE-A- 519 392
US-A- 2 134 703

FILTRATION & SEPARATION, Band 22, Nr.3,
1985, Zeilen 178-180; I. EVANGELISTI: "Filtration under pressure"

(73) Patentinhaber: **Hercules GmbH**
**Paul-Thomas-Strasse 56/58**
**D-40599 Düsseldorf (DE)**

(72) Erfinder: **Just, Günther**
**Verdistrasse 48**
**D-4010 Hilden (DE)**
Erfinder: **Wüst, Willi, Dr. Dipl.-Chem.**
**Fasenenring 32**
**D-4030 Ratingen (DE)**

(74) Vertreter: **Patentanwälte Meinke, Dabringhaus**
**und Partner**
**Postfach 10 46 45**
**D-44046 Dortmund (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Abtrennen von Feststoffen aus einer Suspension, bei dem die Feststoffe durch Druckfiltration in einem Druckdrehfilter als Filterkuchen abgeschieden werden, wobei die Abtrennung in dem Druckdrehfilter mit einem mehrlagigen Metalldrahtgewebe aus Gewebelagen unterschiedlicher Drahtstärke als Filtermedium vorgenommen wird.

Ein solches Verfahren zum Abtrennen eines Feststoffes aus einer Suspension durch Druckfiltration ist aus BE-A-519 392 in allgemeinster Form bekannt. Die Abtrennung kann dabei beispielsweise mit einem dreilagigen Metalldrahtgewebe als Filtermedium vorgenommen werden, welches aus Gewebelagen unterschiedlicher Maschenweite gebildet ist. Als völlig gleichwertig bzw. gleichwirkend ist in dieser Druckschrift aber auch beschrieben, daß andere Filtermaterialien eingesetzt werden können, beispielsweise Textilfiltertücher oder poröse Materialien. Die Druckschrift enthält keine Hinweise auf spezielle abzutrennende Feststoffe, insbesondere keinen Hinweis auf die besonders problematische Abtrennung von Celluloseether aus Celluloseethersuspensionen.

Celluloseether wird beispielsweise durch Veretherung von Alkalicellulose mit Methylchlorid bei Temperaturen von etwa 90° bis 110° C gewonnen, wie dies ausführlich in Ullmanns Enzyklopädie der technischen Chemie, 4. Auflage, Band 9, Seite 205, beschrieben ist. Dabei wird nach der Veretherungsreaktion das gebildete Reaktionsgemisch in ein Rührgefäß gebracht, das mit enthärtetem Wasser von etwa 95° C beschickt ist. Im Rührgefäß wird das bei der Reaktion entstandene Kochsalz herausgelöst und das noch vorhandene Restalkali neutralisiert. Die das Rührgefäß verlassende Suspension muß anschließend einer Trennung unterzogen werden, um den gewünschten reinen Celluloseether zu erhalten.

Diese Trennung von Celluloseether wird bei bekannten Verfahren fast ausschließlich auf Siebzentrifugen durchgeführt. Nachteilig bei derartigen Siebzentrifugen ist jedoch der beim Beaufschlagen entstehende hohe Verlust an Wertprodukt. Darüber hinaus sind Siebzentrifugen für Produkte mit hohem Flockungspunkt oder plastischen Eigenschaften nicht geeignet.

Deshalb ist bereits versucht worden, die Aufarbeitung von Celluloseethern auf Druckdrehfiltern durchzuführen. Die für Druckdrehfilter üblichen Textilfilterbeläge führen jedoch bei den extremen Verfahrensbedingungen, nämlich vergleichsweise hohen Drücken und hohen Temperaturen, zu Problemen. So tritt durch die Biegewechselbeanspruchung Dehnung, Materialermüdung und Ausreißen des Textilgewebes auf, außerdem neigt das Gewebe sehr stark zum Verkleben. Das Gewebe läßt sich auch durch intensives Spülen nicht mehr reinigen, so daß es schon nach kurzer Filtrationszeit unbrauchbar wird.

Aufgabe der Erfindung ist die Schaffung einer Lösung, mit welcher die Abtrennung von Celluloseethern, insbesondere von Celluloseethern mit plastischen Eigenschaften und/oder hohem Flockungspunkt, aus einer Celluloseethersuspension ermöglicht wird, wobei ein Verstopfen der Trenneinrichtung vermieden werden und die Trenneinrichtung eine lange Lebensdauer aufweisen soll.

Diese Aufgabe wird mit einem Verfahren der eingangs bezeichneten Art erfindungsgemäß dadurch gelöst, daß zum Abtrennen von Celluloseethern, insbesondere von Celluloseethern mit plastischen Eigenschaften und/oder hohem Flockungspunkt, aus einer Celluloseethersuspension als Filtermedium ein mehrlagiges Quadratmaschengewebe in Leinenbindung mit einem beidseitig von wenigstens je einem Schutzgewebe umgebenen Filtergewebe eingesetzt wird, und daß nach Entfernen des Filterkuchens das Filtermedium mit Dampf, Preßluft oder Druckwasser gereinigt wird.

Es hat sich überraschend herausgestellt, daß mit dieser Verfahrensführung eine weitgehend störungsfreie Abtrennung derartiger Celluloseether erreichbar ist, da nach der Filtration das Filtermedium gereinigt wird, so daß keine Verstopfung des Filtermediums auftreten kann. Gleichzeitig wird durch die Reinigung des Filtermediums auch das noch im Filtermedium verbliebene Wertprodukt mit ausgewaschen, so daß keine Wertproduktverluste auftreten. Durch den Einsatz eines derartigen mehrlagigen Quadratmaschengewebes mit einer inneren Filterschicht mit beidseitig umgebenden Schutzgeweben wird eine hohe Lebensdauer der Trenneinrichtung gewährleistet, wobei das Filtergewebe als eigentliches Filtermedium dient, während die beidseitigen Schutzgewebe eine hohe mechanische Festigkeit des Drahtgewebes gegen die auftretenden Biegewechselbeanspruchungen gewährleistet.

Zur Abtrennung des Celluloseethers ist es besonders zweckmäßig, wenn als Filtermedium ein vierlagiges Quadratmaschengewebe in Leinenbindung mit einem ersten oberen Schutzgewebe, einem zweiten Filtergewebe, einem dritten unteren Schutzgewebe und einem vierten Stützgewebe eingesetzt wird. Es hat sich herausgestellt, daß dieser Aufbau des Filtermediums besonders günstige Trenneigenschaften aufweist und nicht zur Verstopfung bzw. zum Filterdurchschlag neigt.

Dabei ist es vorteilhaft, daß ein vierlagiges Drahtgewebe eingesetzt wird, dessen oberes Schutzgewebe eine etwa dreifache, dessen unteres Schutzgewebe eine etwa fünffache und dessen Stützgewebe eine etwa dreizehnfache Maschenweite gegenüber der Maschenweite des Filtergewebes aufweist. Durch diese Ausge-

2

staltung der Maschenweiten des Drahtgewebelaminats wird ein Optimum an freiem Durchgang und Gewebestabilität erreicht.

In besonders vorteilhafter Ausgestaltung sieht die Erfindung vor, daß ein Filtergewebe eingesetzt wird, dessen Maschenweite etwa den mittleren Teilchendurchmesser der Suspensionsteilchen entspricht. Es hat sich nämlich herausgestellt, daß ein derartiges Filtergewebe alle Suspensionsteilchen sicher zurückhält, sogar Teilchen mit kleinerem Durchmesser als die Maschenweite des Filtergewebes, so daß kein Filterdurchschalg auftritt.

Zur Vermeidung von Korrosion ist vorgesehen, daß ein Drahtgewebe aus einem hochkorrosionsfesten Edelstahl, insbesondere mit mehr als 50 Gew.-% Nichteisenanteilen, insbesondere Nickel und Chrom, eingesetzt wird. Durch den Einsatz dieser Materialien wird das Auftreten von Spannungsrißkorrosionen aufgrund des hohen Kochsalzgehaltes der heißen Suspension vermieden.

Zur Erzielung einer hohen Raum-Zeit-Ausbeute und besonders niedriger Verluste an Wertprodukt ist vorgesehen, daß eine hochkonzentrierte Celluloseethersuspension in einem Konzentrationsverhältnis Celluloseether zu Wasser von 1 : 5 bis 1 : 50 eingesetzt wird. Dabei wird bevorzugt ein Konzentrationsverhältnis von 1 : 8 bis 1 : 20, insbesondere 1 : 10 bis 1 : 15 gewählt. Es muß selbstverständlich sichergestellt sein, daß die eingesetzt Suspension noch pumpfähig ist.

Ferner sieht die Erfindung vor, daß der Filterkuchen nach der Filtration mit heißem Wasser und/oder Wasserdampf ausgewaschen und anschließend vor der Entnahme durch Gegenblasen von Dampf oder Heißluft vom Drahtgewebe gelöst wird. Dadurch werden die Fremdstoffe, wie Salze od. dgl., aus dem Filterkuchen ausgewaschen, so daß der Filterkuchen fast ausschließlich aus Celluloseether besteht.

In besonders vorteilhafter Ausgestaltung sieht die Erfindung vor, daß nach Entnahme des Filterkuchens das Drahtgewebe in Filtratrichtung mit heißem Wasser bei wenigstens 1,0, bevorzugt 1,5 bis 2,0 MPa (15 bis 20 bar) Überdruck mittels Flachstrahldüsen gespült wird. Dabei ist es vorgesehen, daß das anfallende Spülwasser zur Filterkuchenwäsche zurückgeführt oder als Ansetzwasser eingesetzt wird. Dadurch wird das Filtermedium gesäubert und gleichzeitig das noch im Filtermedium verbliebene Wertprodukt gewonnen, das dann dem Verfahren zurückgeführt wird. Dazu wird nur ein kleiner Anteil an Spülflüssigkeit benötigt, der in der Größenordnung der Waschwassermenge bei der Filterkuchenmwäsche liegt.

Die Erfindung ist nachstehend anhand der Zeichnung beispielsweise näher erläutert. Diese zeigt in

Fig. 1  in einem Querschnitt einen Druckdrehfilter,

Fig. 2  in schematischer Darstellung in einem Querschnitt ein mehrlagiges Drahtgewebe als Filtermedium und in

Fig. 3  ein vereinfachtes Verfahrensfließbild einer Anlage zur Methylcelluloseaufarbeitung.

Ein Druckdrehfilter 1 weist ein ortsfestes Gehäuses 2 und eine darin drehbare Filtertrommel 3 auf.

Das Gehäuse 2 ist in fünf Arbeitskammern A bis E unterteilt, die durch Trennelemente 4 begrenzt werden, wobei jedes Trennelement pneumatisch gegen die Filtertrommel 3 gepreßt wird. Die Abdichtung der bewegten Teile erfolgt mit einem Elastomerdichtrahmen oder mit einer Membranabdichtung. Die seitliche Abdichtung der sich drehenden Trommel 3 gegen das feststehende Gehäuse 2 erfolgt durch Stopfbuchsen, was in der Zeichnung nicht näher dargestellt ist. An jeder Arbeitskammer A bis E ist je ein Stutzen a bis e angeordnet.

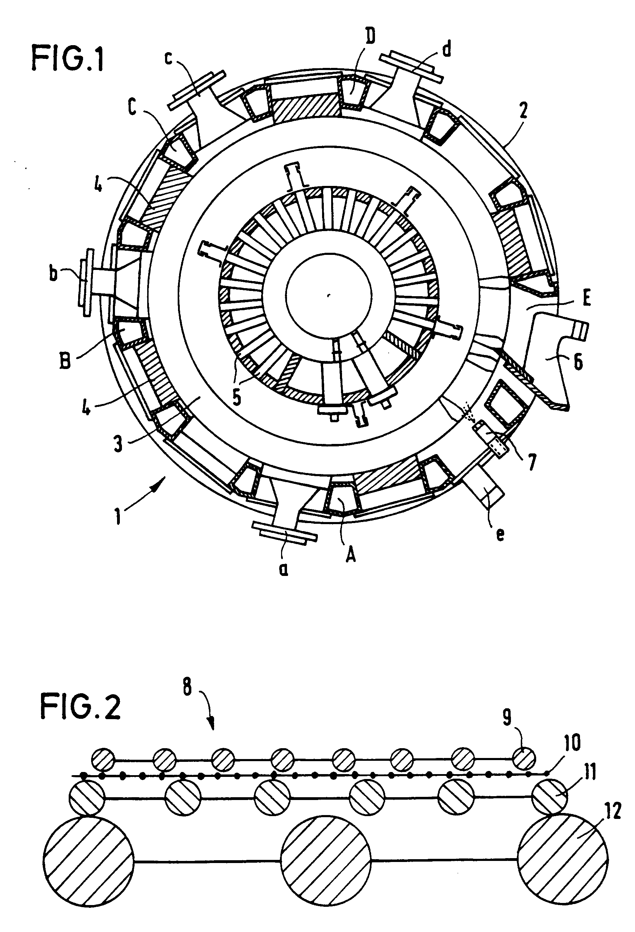

Die Filtertrommel 3 ist durch Trennleisten und Trennringe in Filterzellen unterteilt, in die vierlagige Metalldrahtgewebe eingesetzt sind, die in Fig. 2 näher dargestellt sind. Von diesen Filterzellen wird das Filtrat über Filtratrohre 5 aus dem Druckdrehfilter 1 geführt.

In der Arbeitskammer E sind eine Abschabevorrichtung 6 und Flachstrahldüsen 7 zum Aufsprühen von Wasser auf das Metalldrahtgewebe angeordnet.

In Fig. 2 ist ein vierlagiges Metalldrahtgewebe 8 dargestellt, das aus einem oberen Schutzgewebe 9, einem Filtergewebe 10, einem Schutzgewebe 11 und schließlich einem Stützgewebe 12 besteht.

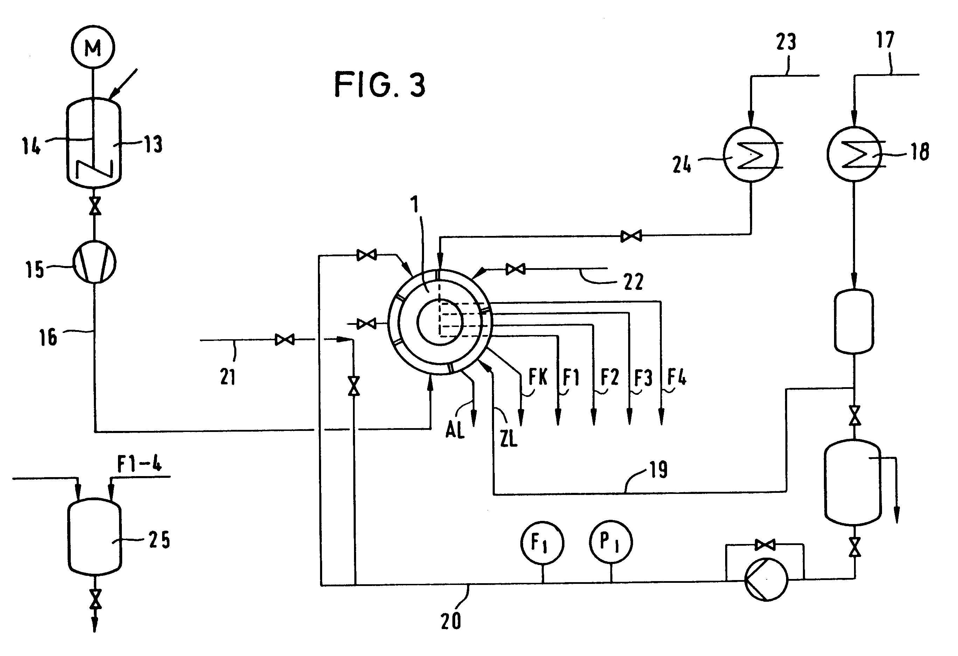

Fig. 3 zeigt ein vereinfachtes Verfahrensfließbild einer Methylcelluloseaufarbeitung, wobei dieselben Bezugszeichen wie in Fig. 1 und 2 verwandt werden, wenn gleiche Teile bezeichnet sind.

Ein Rührbehälter 13 mit einem Rührwerk 14 weist am Behälteraustritt eine mit einer Pumpe 15 versehene Leitung 16 für die Celluloseethersuspension auf. Eine Wasserleitung 17 ist über einen Wärmetauscher 18 geführt und spaltet sich in zwei Zuleitungen 19 und 20 auf. Zwei Leitungen 21 und 22 dienen zur Dampf-, Wasser- oder Preßluftzuführung zum Druckdrehfilter 1. Eine Leitung 23 für Luft ist über einen Wärmetauscher 24 zum Druckdrehfilter 1 geführt.

Vom Druckdrehfilter 1 führen Filtratleitungen F1 bis F4 in einen Behälter 25. Außerdem weist der Druckdrehfilter 1 eine Zulaufleitung ZL und eine Ablaufleitung AL sowie eine Leitung FK für den Filterkuchen auf.

Der Filtrierablauf erfolgt folgendermaßen (Fig. 1):
Eine Celluloseethersupsension wird mit Überdruck durch den Stutzen a in die Arbeitskammer A gepumpt.

3

Während sich aus dem festen Celluloseether auf den Filterzellen ein Filterkuchen aufbaut, gelangt das Filtrat, das vornehmlich aus Wasser und darin gelöstem Salz besteht, durch das Metalldrahtgewebe in die Filtratrohre 5. Durch die Drehbewegung der Filtertrommel 3 werden die Filterzellen mit dem Filterkuchen in die Arbeitskammer B gefördert. In dieser Kammer B wird der Filterkuchen durch unter Überdruck stehendem Dampf ausgewaschen, der durch den Stutzen b eingeleitet wird. Das ausgewaschene Salz fließt durch das Metalldrahtgewebe in die Filtratrohre 5. In der Arbeitskammer C wird dieser Waschvorgang mit unter Überdruck stehenden heißem Wasser wiederholt, das durch den Stutzen c eingepumpt wird.

Nach dem Waschvorgang in den Arbeitskammern B und C wird der Feuchtegehalt des Filterkuchens in der Kammer D entsprechend der Erfordernisse in den nachgeschalteten Bearbeitungsstufen eingestellt. Dazu wird durch den Stutzen d Dampf- oder Preßluft oder auch Flüssigkeit mit einem geringen Überdruck in die Kammer D gepumpt. In der drucklosen Kammer E erfolgt schließlich die Abnahme des Filterkuchens und die Reinigung des Metalldrahtgewebes. Zunächst wird der Filterkuchen durch Gegenblasen mit Preßluft od. dgl. von den Filterzellen gelöst und anschließend mit der Abschabevorrichtung 6 abgetragen. Danach wird das Drahtgewebe mit heißem Wasser, das durch den Stutzen e eintritt und über die Flachstrahldüsen 7 auf die Filterzellen gesprüht wird, ausgewaschen. Dadurch wird das Drahtgewebe vollständig gereinigt und gleichzeitig das noch im Drahtgewebe verbliebene Wertprodukt Celluloseether mit dem Spülwasser gewonnen. Um zu vermeiden, daß das unter Überdruck eintretende Spülwasser in den Bereich der Abschabevorrichtung 6 gelangt, kann zwischen der Abschabevorrichtung 6 und den Flachstrahldüsen 7 ein Trennelement angeordnet sein, das in Fig. 1 nicht näher dargestellt ist.

In Fig. 2 ist das als Filtermedium dienende vierlagige Metalldrahtgewebe 8 dargestellt. Das Filtrat tritt zunächst durch das obere Schutzgewebe 9, dann durch das Filtergewebe 10, das untere Schutzgewebe 11 und schließlich durch das Stützgewebe 12. Die einzelnen Drahtgewebe 9 bis 12 sind als Quadratmaschengewebe in Leinenbindung gewebt, was in Fig. 2 nicht zu erkennen ist. Das eigentliche Filtergewebe 10 ist feinmaschig und feindrahtig und wird von den gröberen Schutzgeweben 9 und 11 sowie vom Stützgewebe 12 umgeben. Dabei weist das obere Schutzgewebe 9 eine Maschenweite von 250 μm, das Filtergewebe 10 eine Maschenweite von 75 μm, das untere Schutzgewebe 11 eine Maschenweite von 400 μm und das auntere Stützgewebe 12 eine Maschenweite von 1000 μm auf.

Das vierlagige Drahtgewebe 8 ist versintert und besteht aus einem hochkorrosionsfesten Werkstoff.

In Fig. 3 ist ein vereinfachtes Verfahrensfließbild einer Methylcelluloseaufarbeitung dargestellt:

Aus dem Rührbehälter 13 mit dem Rührwerk 14 wird eine Celluloseethersuspension über die Pumpe 15 durch die Leitung 16 in den Druckdrehfilter 1 gefördert (in die Kammer A nach Fig. 1). Über die Wasserleitung 17 gelangt Wasser durch den Wärmetauscher 18, in dem es erwärmt wird, über weitere Apparate, auf die es hier nicht näher ankommt, in die zwei Zuleitungen 19 und 20. Über die Leitung 19 wird das Wasser in die Kammer E des Druckdrehfilters 1 zur Filtergewebewäsche gefördert, was in der Zeichnung mit ZL bezeichnet ist. Das austretende Spülwasser, in dem aus dem Filtergewebe ausgewaschenes Celluloseether vorliegt, wird über die Ablaufleitung AL abgeführt und kann beispielsweise der Waschkammer C zugeführt werden.

Über die Wasserleitung 20 wird das heiße, unter Überdruck stehende Wasser in die Waschkammern C und nach Bedarf auch B des Druckdrehfilters 1 gefördert. Niederdruckdampf bis maximal 3 bar wird durch die Leitung 21 in die Waschkammer B des Druckdrehfilters 1 geführt. Entsprechend gelangt über die Leitung 22 Dampf in die Trocknungskammer D des Druckdrehfilters 1. Durch die Leitung 23 wird Luft, in Wärmetauscher 24 erwärmt, in den Druckdrehfilter 1 gefördert, die zum Gegenblasen und Ablösen des Filterkuchens vom Drahtfiltergewebe in der Arbeitskammer E benötigt wird.

Das in den Arbeitskammern A bis D des Druckdrehfilters 1 anfallende Filtrat wird durch die Filtratleitungen F1 bis F4 abgeleitet und in den Behälter 25 geführt. Der aus dem Wertprodukt Celluloseether bestehende Filterkuchen wird nach der Abtragung in der Arbeitskammer E des Druckdrehfilters 1 über eine Leitung FK abgeführt und einer Weiterverarbeitung zugeführt, auf die es hier nicht näher ankommt.

Ausführungsbeispiel:

Eine Methylhydroxyethylcellulose (MHEC mit 23 % $CH_3O$ - und 9 % Hydroxyethylgruppen mit 88°C Flockungspunkt) auf Basis Pulvercellulose mit 34 % Feuchte und 26 % Kochsalzgehalt wurde mit soviel kochendem Wasser vermischt, daß sich eine Flotte von 1 : 8,6 (1 Teil MHEC/8,6 Teile Wasser) ergab.

Die Suspension wurde einem auf 100°C vorgeheizten Druckdrehfilter mit 1 m² Filterfläche und einer Trommelumdrehung pro Minute mit 0,2 MPa (2 bar) Pumpendruck zugeführt. Die Filterfläche bestand aus einem vierlagigen, versinterten Metallgewebe in quadratischer Leinenbindung folgender Dimensionierung (Reihenfolge in Filtratfließrichtung):

4

| Nr. | Maschenweite | Drahtstärke |
|-----|-------------|-------------|
| 1 | 250 $\mu$m | 160 $\mu$m (oberes Schutzgew.) |
| 2 | 75 $\mu$m | 50 $\mu$m (Filtergewebe) |
| 3 | 400 $\mu$m | 250 $\mu$m (unteres Schutzgew.) |
| 4 | 1000 $\mu$m | 630 $\mu$m (Stützgewebe) |

Die offene Filterfläche dieses Laminats aus Werkstoff Nr. 1.4539 betrug 35 %.

Auf der Filterfläche bildete sich ein geschlossener Filterkuchen von 20 mm Stärke, der anschließend mit 2 bar Dampf intensiv ausgeblasen wurde, was zu einer starken Absenkung des Restkochsalzgehaltes führte.

Heißwasserwäsche und Preßluftblasen in Filtratrichtung schloß sich an, bevor die Kuchenabnahme folgte. Dazu wurde zunächst mit Preßluft zum Auflockern rückgeblasen und anschließend mit einem Schaber der Feststoff von der Filterfläche abgetragen.

Nach der Kuchenabnahme erfolgte die intensive Reinigung der Metalldrahtgewebelaminate durch Heißwasseraufdüsen mit Flachstrahldüsen bei wenigstens 1,0 bevorzugt 1,5 bis 2,0 MPa Anschließend wiederholte sich der beschriebene Zyklus immer wieder in gleicher Weise, wobei Leistungsvergleiche über viele Stunden keinen absinkenden Filterdurchsatz erkennen ließen.

Die gemessenen Mengen pro Stunden bzw. die daraus abgeleiteten Werte:

|  | kg | % NaCl | % Org.S. |
|--|----|--------|----------|
| Suspensionsaufgabe | 6230 | | |
| Waschwasser gesamt | 670 | | |
| 1. Filtrat | 5100 | 7,05 | 0,85 |
| 2. Filtrat (Dampfeinl.) | 280 | 7,35 | 0,95 |
| 3. Filtrat (Waschwasserst.) | 55 | 7,15 | 0,90 |
| 4. Filtrat (Trockenblasen) | 205 | 6,90 | 0,85 |
| Gewebespülwasser | 600 | | |

| | | |
|--|--|--|
| Ausbeute (atro) | 560 | kg |
| Feuchte ) | 55 | % |
| im Kuchen | | |
| Salzgehalt ) | 0,2 | % |
| Verluste (incl. Hemicell.) | 7,9 | % |

Natürlich ist die Erfindung nicht auf die Ausführungsbeispiele beschränkt. Weitere Ausgestaltungen sind möglich, ohne den Grundgedanken zu verlassen. So kann in bestimmten Anwendungsfällen vorgesehen sein, die Auswaschung der Metalldrahtgewebe durch Heißwasseraufdüsen mit Flachstrahldüsen bei Drücken von mehr als 10,0 MPa durchzuführen. Außerdem ist das erfindungsgemäße Verfahren nicht auf die Anwendung auf Druckdrehfilter beschränkt. Der Verfahrensablauf kann entsprechend auch in diskontinuierlich betriebenen Druckfilternutschen durchgeführt werden.

**Patentansprüche**

1. Verfahren zum Abtrennen von Feststoffen aus einer Suspension, bei dem die Feststoffe durch Druckfiltration in einem Druckdrehfilter als Filterkuchen abgeschieden werden, wobei die Abtrennung in dem Druckdrehfilter mit einem mehrlagigen Metalldrahtgewebe aus Gewebelagen unterschiedlicher Drahtstärke als Filtermedium vorgenommen wird,
dadurch gekennzeichnet,
daß zum Abtrennen von Celluloseethern, insbesondere von Celluloseethern mit plastischen Eigenschaften und/oder hohem Flockungspunkt, aus einer Celluloseethersuspension als Filtermedium ein mehrlagiges Quadratmaschengewebe in Leinenbindung mit einem beidseitig von wenigstens je einem Schutzgewebe umgebenen Filtergewebe eingesetzt wird, und daß nach Entfernen des Filterkuchens das Filtermedium mit Dampf, Preßluft oder Druckwasser gereinigt wird.

2. Verfahren nach Anspruch 1,
dadurch gekennzeichnet,
daß als Filtermedium ein vierlagiges Quadratmaschengewebe mit einem ersten oberen Schutzgewebe, einem zweiten Filtergewebe, einem dritten unteren Schutzgewebe und einem vierten Stützgewebe eingesetzt wird.

3. Verfahren nach Anspruch 1 oder 2,
dadurch gekennzeichnet,
daß ein vierlagiges Drahtgewebe eingesetzt wird, dessen oberes Schutzgewebe eine etwa dreifache, dessen unteres Schutzgewebe eine etwa fünffache und dessen Stützgewebe eine etwa dreizehnfache Maschenweite gegenüber der Maschenweite des Filtergewebes aufweist.

4. Verfahren nach Anspruch 1 oder einem der folgenden,
dadurch gekennzeichnet,
daß ein Filtergewebe eingesetzt wird, dessen Maschenweite etwa dem mittleren Teilchendurchmesser der Suspensionsteilchen entspricht.

5. Verfahren nach Anspruch 1 oder einem der folgenden,
dadurch gekennzeichnet,
daß ein Drahtgewebe aus einem hochkorrosionsfesten Edelstahl, insbesondere mit mehr als 50 Gew.-% Nichteisenanteilen, insbesondere Nickel und Chrom, eingesetzt wird.

6. Verfahren nach Anspruch 1 oder einem der folgenden,
dadurch gekennzeichnet,
daß eine Celluloseethersuspension in einem Konzentrationsverhältnis Celluloseether zu Wasser von 1 : 5 bis 1 : 50 eingesetzt wird.

7. Verfahren nach Anspruch 1 oder einem der folgenden,
dadurch gekennzeichnet,
daß eine Celluloseethersuspension in einem Konzentrationsverhältnis Celluloseether zu Wasser von 1 : 8 bis 1 : 20, bevorzugt 1 : 10 bis 1 : 15, eingesetzt wird.

8. Verfahren nach Anspruch 1 oder einem der folgenden,
dadurch gekennzeichnet,
daß der Filterkuchen nach der Filtration mit heißem Wasser und/oder Wasserdampf ausgewaschen und anschließend vor der Entnahme durch Gegenblasen von Dampf und/oder Preßluft vom Drahtgewebe gelöst wird.

9. Verfahren nach Anspruch 1 oder einem der folgenden,
dadurch gekennzeichnet,
daß nach Entnahme des Filterkuchens das Drahtgewebe in Filtratrichtung mit heißem Wasser bei wenigstens 1, bevorzugt 1,5 bis 2,0 MPa Überdruck mittels Flachstrahldüsen gespült wird.

10. Verfahren nach Anspruch 9,
dadurch gekennzeichnet,

EP 0 326 939 B1

daß das anfallende Spülwasser zur Filterkuchenwäsche zurückgeführt oder als Ansetzwasser eingesetzt wird.

## Claims

1. Method for separating off solids from a suspension, in which the solids are sedimented as a filter cake by pressure filtration in a rotary pressure filter, the separation being performed in the rotary pressure filter having a multi-ply metal wire cloth made of cloth plies of different wire thickness as a filter medium, characterized in that the filter medium used for separating off cellulose ethers, in particular cellulose ethers having plastic properties and/or a high flocculation point, from a cellulose ether suspension is a multi-ply square mesh cloth in plain weave having a filter cloth surrounded on both sides by at least one protective cloth on each side and in that, after removal of the filter cake, the filter medium is cleaned with steam, compressed air or high-pressure water.

2. Method according to Claim 1, characterized in that the filter medium used is a four-ply square mesh cloth having a first upper protective cloth, a second filter cloth, a third lower protective cloth and a fourth support cloth.

3. Method according to Claim 1 or 2, characterized in that a four-ply wire cloth is used, the upper protective cloth of which exhibits a roughly three-fold mesh width, the lower protective cloth of which exhibits a roughly five-fold mesh width and the support cloth of which exhibits a roughly thirteen-fold mesh width in comparison with the mesh width of the filter cloth.

4. Method according to Claim 1 or one of the following claims, characterized in that a filter cloth is used, the mesh width of which roughly corresponds to the mean particle diameter of the suspension particles.

5. Method according to Claim 1 or one of the following claims, characterized in that a wire cloth is used made of a highly corrosion-resistant stainless steel, in particular having more than 50% by weight of non-ferrous contents, in particular nickel and chromium.

6. Method according to Claim 1 or one of the following claims, characterized in that a cellulose ether suspension is used in a concentration ratio of cellulose ether to water of 1:5 to 1:50.

7. Process according to Claim 1 or one of the following claims, characterized in that a cellulose ether suspension is used in a concentration ratio of cellulose ether to water of 1:8 to 1:20, preferably 1:10 to 1:15.

8. Method according to Claim 1 or one of the following claims, characterized in that the filter cake, after filtration, is washed with hot water and/or steam and then, before removal, is separated from the wire cloth by a counterblast by steam and/or compressed air.

9. Method according to Claim 1 or one of the following claims, characterized in that, after removal of the filter cake, the wire cloth is rinsed in the filtrate direction with hot water at at least 1, preferably 1.5 to 2.0, mPa gauge pressure by means of flat jet nozzles.

10. Method according to Claim 9, characterized in that the rinse water arising is returned to the filter cake wash or is used as batching water.

## Revendications

1. Procédé pour séparer des matières solides d'une suspension, dans lequel les matières solides sont déposées sous forme de gâteau par filtration sous pression dans un filtre rotatif fonctionnant sous pression, dans lequel la séparation est effectuée avec, comme milieu filtrant, une toile métallique formée de plusieurs couches de différents diamètres de fil, caractérisé en ce qu'on utilise, pour séparer des éthers de cellulose d'une suspension de ces éthers, en particulier d'éthers de cellulose doués de propriétés plastiques et/ou ayant un haut point de floculation, une toile métallique multicouche à mailles carrées à armure toile comportant un tissu filtrant entouré sur chacun des deux côtés d'au moins un tissu de protection, et en ce que le milieu filtrant est nettoyé à la vapeur, à l'air comprimé ou à l'eau

7

sous pression après que le gâteau de filtre a été enlevé.

2. Procédé suivant la revendication 1, caractérisé en ce qu'on utilise comme milieu filtrant un tissu à quatre couches à mailles carrées comportant un premier tissu protecteur supérieur, un deuxième tissu filtrant, un troisième tissu protecteur inférieur et un quatrième tissu de soutien.

3. Procédé suivant la revendication 1 ou 2, caractérisé en ce qu'on utilise une toile métallique à quatre couches dont, par rapport à l'ouverture de maille du tissu filtrant, le tissu de protection supérieur a une ouverture à peu près triple, le tissu protecteur inférieur a une ouverture à peu près quintuple et le tissu de soutien a une ouverture à peu près treize fois plus grande.

4. Procédé suivant la revendication 1 ou l'une des revendications qui la suivent, caractérisé en ce qu'on utilise un tissu filtrant dont l'ouverture de maille correspond approximativement au diamètre moyen des particules en suspension.

5. Procédé suivant la revendication 1 ou l'une des revendications qui la suivent, caractérisé en ce qu'on utilise une toile métallique en acier spécial très résistant à la corrosion, contenant en particulier plus de 50 % en poids de constituants non ferreux, notamment de nickel et de chrome.

6. Procédé suivant la revendication 1 ou l'une des revendications qui la suivent, caractérisé en ce qu'on utilise une suspension d'éther de cellulose dans un rapport de concentrations de l'éther de cellulose à l'eau de 1:5 à 1:50.

7. Procédé suivant la revendication 1 ou l'une des revendications qui la suivent, caractérisé en ce qu'on utilise une suspension d'éther de cellulose dans un rapport de concentrations de l'éther de cellulose à l'eau de 1:8 à 1:20, de préférence de 1:10 à 1:15.

8. Procédé suivant la revendication 1 ou l'une des revendications qui la suivent, caractérisé en ce que le gâteau de filtre, après la filtration, est lavé par épuisement à l'eau chaude et/ou à la vapeur d'eau puis détaché de la toile métallique par un jet de vapeur et/ou d'air comprimé en sens contraire avant d'être déchargé.

9. Procédé suivant la revendication 1 ou l'une des revendications qui la suivent, caractérisé en ce que la toile métallique est rincée dans la direction du filtrat au moyen de buses à jet plat avec de l'eau chaude en surpression d'au moins 1, de préférence de 1,5 à 2,0 MPa, après que le gâteau de filtre a été déchargé.

10. Procédé suivant la revendication 9, caractérisé en ce que l'eau de rinçage obtenue est recyclée pour le lavage du gâteau de filtre ou est utilisée comme eau de préparation.

FIG.1

FIG.2

FIG. 3

EP 0 326 939 B1